Europäisches Patentamt

European Patent Office

Office européen des brevets

(11) Numéro de publication: **0 372 436**
**A1**

## (12) DEMANDE DE BREVET EUROPEEN

(21) Numéro de dépôt: 89122259.8

(22) Date de dépôt: 02.12.89

(51) Int. Cl.⁵: **B32B 27/40, A44C 5/00**

(30) Priorité: 05.12.88 FR 8816038

(43) Date de publication de la demande:
**13.06.90 Bulletin 90/24**

(84) Etats contractants désignés:
**AT CH DE GB LI**

(71) Demandeur: **ETA SA Fabriques d'Ebauches**
**Schild-Rust-Strasse 17**
**CH-2540 Granges(CH)**

(72) Inventeur: **Cognard, Jacques**
**Chemin de Serroue 17**
**CH-2006 Neuchâtel(CH)**

(74) Mandataire: **de Montmollin, Henri et al**
**ICB Ingénieurs Conseils en Brevets SA**
**Passage Max. Meuron 6**
**CH-2001 Neuchâtel(CH)**

(54) Objet en matière plastique en forme de lanière comportant un film mince sur lequel est imprimé un motif décoratif.

(57) L'objet (1), qui est un bracelet dans l'exemple décrit, comporte un corps (2) en un matériau thermoplastique et un film (3) sur lequel est imprimé le motif décorant ce bracelet (1).

Pour éviter que des traces de pliage indélébile n'apparaissent sur le film (3), ou même qu'il ne se casse, aux endroits où le bracelet (1) est plié lors de sa mise en place au poignet de son porteur ou de son enlèvement, ce film (3) est en polyuréthane.

## OBJET EN MATIERE PLASTIQUE EN FORME DE LANIERE COMPORTANT UN FILM MINCE SUR LEQUEL EST IMPRIME UN MOTIF DECORATIF

La présente invention concerne un objet en matière plastique en forme de lanière, notamment un bracelet pour montre, comportant un corps en un matériau thermoplastique, un film fixé à une face dudit corps et un motif décoratif imprimé sur ledit film.

Par mesure de simplification, la description qui va suivre sera limitée au cas où un tel objet est un bracelet, mais il est évident que la présente invention s'applique également aux autres objets répondant à la définition ci-dessus, parmi lesquels on peut citer, à titre d'exemple non limitatif, des ceintures pour vêtements, des bretelles pour sacs de dames, ou des pattes de fermeture de valises ou de sacs de voyage.

Le chlorure de polyvinyle est un matériau très bon marché qui se prête bien à la réalisation de films minces et, à partir de ces films, à la fabrication en très grandes séries d'objets dont le prix de revient doit être très bas, tels que des emballages de toutes sortes ou des affichettes autocollantes publicitaires ou décoratives.

Du fait que ces objets sont fabriqués en très grandes séries, les techniques d'impression permettant de reporter sur un film de ce matériau un texte ou un motif décoratif ont été étudiées très à fond et sont maintenant bien connues et bien au point.

Il est donc normal que, actuellement, dans tous les bracelets décorés par un motif imprimé sur un film mince, ce dernier soit en chlorure de polyvinyle.

Cependant, le chlorure de polyvinyle est un matériau qui est rigide et cassant lorsqu'il est pur.

Il est donc absolument nécessaire de lui ajouter une quantité importante d'un plastifiant adéquat pour réaliser des films minces destinés a être utilisés dans la fabrication d'objets souples tels que ceux qui ont été mentionnés ci-dessus.

Lorsqu'un tel film est utilisé à la fabrication d'emballages ou d'affichettes autocollantes, le plastifiant qu'il contient n'a aucun inconvénient.

Par contre, si un tel film est fixé au corps d'un bracelet en un matériau thermoplastique, le plastifiant qu'il contient a tendance à migrer de ce film vers ce corps de bracelet qui en contient beaucoup moins.

La proportion de plastifiant dans le film diminue donc et, au bout d'un certain temps, qui peut être inférieur à une année, le matériau de ce film devient rigide et cassant.

Cette rigidité du film a comme conséquence que des traces de pliage indélébiles apparaissent sur le bracelet aux endroits où celui-ci est plié lors de sa mise en place ou de son enlèvement. Après quelque temps, le film peut même se casser à ces endroits.

Ces traces de pliage nuisent évidemment à l'aspect eshétique du bracelet, et, si le film se casse, ce bracelet devient inutilisable.

Les mêmes inconvénients se présentent avec les autres objets du même genre, lorsque ceux-ci sont soumis à des pliages répétés pendant leur utilisation.

Un but de la présente invention est de proposer un objet du genre défini ci-dessus qui ne présente pas ces inconvénients, c'est-à-dire dans lequel le film portant le motif décoratif ne se casse pas et ne présente même pas de traces aux endroits où il est plié, même après un long usage de cet objet.

Ce but est atteint par l'objet revendiqué, grâce au fait que le film sur lequel est imprimé le motif décoratif est en polyuréthane.

La description qui va suivre sera faite en prenant un bracelet pour montre comme exemple non limitatif d'objet selon l'invention.

La figure unique représente une coupe transversale et schématique de ce bracelet.

Le bracelet de la figure unique, désigné par la référence 1, comporte un corps 2 en forme de bande qui constitue la majeure partie de ce bracelet 1 et qui comprend une face 2a destinée à venir en contact avec le poignet du porteur du bracelet 1 et une face 2b opposée à cette dernière.

Le corps 2 du bracelet 1 est en un matériau thermoplastique qui peut être n'importe lequel des matériaux thermoplastiques bien connus et qui ne seront donc pas énumérés ici.

Le bracelet 1 comporte en outre un film mince 3 en polyuréthane fixé par sa face 3a à la face 2b du corps 2 d'une manière qui sera évoquée plus loin.

L'autre face du film 3, désignée par 3b porte le motif décorant le bracelet 1.

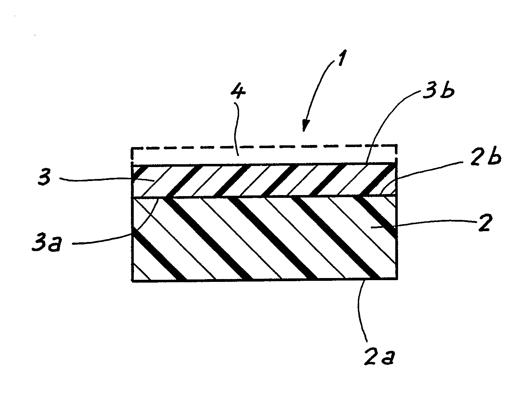

Ce motif, qui n'est pas visible dans la figure 1, a été imprimé sur cette face 3b du film 3 d'une manière qui sera également évoquée plus loin.

Parmi tous les matériaux thermoplastiques, le polyuréthane est le seul qui soit un élastomère de constitution, c'est-à-dire le seul qui soit souple et élastique par nature, sans qu'il soit nécessaire de lui ajouter un plastifiant.

Il en résulte que le film 3 ne risque pas de se casser pendant les opérations d'impression du motif décoratif sur ce film ou de fabrication du bracelet et qu'aucune trace de pliage n'apparaît sur ce bracelet même après un long usage de celui-ci.

Les fournissseurs de polyuréthane, tels que, par exemple, la Société Wolf à Walsrode (Allemagne Fédérale), proposent dans leurs catalogues des films de ce matériau sous forme de feuilles ou de bandes de grandes dimensions et de diverses épaisseurs.

En outre, des essais réalisés par la déposante ont montré que, contrairement à une opinion assez répandue, les films de polyuréthane peuvent très bien être imprimés en utilisant les mêmes techniques que celles qui sont utilisées pour imprimer les films de chlorure de polyvinyle, qui ne seront pas décrites ici car elles sont bien connues, condition toutefois que les encres utilisées soient convenablement choisies. Ces encres peuvent être par exemple celles qui portent la désignation "Série 160" dans le catalogue de la Société Printcolor AG à Mutschellen (Suisse).

Le bracelet 1 peut donc être fabriqué en utilisant n'importe lequel des procédés qui sont mis en oeuvre pour fabriquer les bracelets connus dans lequels le motif décoratif est imprimé sur un film de chlorure de polyvinyle.

Ces procédés sont bien connus et ne seront donc pas déorits ici. On mentionnera simplement l'un des plus utilisés qui comprend l'impression de plusieurs exemplaires du motif décoratif désiré sur une feuille ou une bande, en polyuréthane dans le cas présent, ayant l'épaisseur du film 3.

Cette feuille ou cette bande est ensuite découpée de manière à former des films tels que le film 3 et portant chacun un exemplaire du motif décoratif.

Chacun de ces films 3 est ensuite placé dans un moule ayant la forme et les dimensions du bracelet 1, de manière que sa face portant le motif imprimé soit tournée vers la paroi du moule.

Le matériau thermoplastique choisi pour le corps 2 du bracelet est ensuite injecté dans ce moule, de manière classique, a une température égale ou supérieure à sa température de fusion.

Pendant cette injection, le polyuréthane de la face du film 3 qui est en contact avec le matériau injecté fond et se mélange à ce dernier. Après refroidissement ce film 3 adhère donc solidement au corps 2 du bracelet 1.

Comme cela a déja été mentionné, le corps 2 du bracelet 1 peut être réalisé en n'importe lequel des matériaux thermoplastiques pouvant être injectés dans un moule.

Cependant, lorsque le procédé utilisé pour fabriquer le bracelet 1 est celui qui a été décrit ci-dessus, la meilleure adhérence entre le film 3 et le corps 2 de ce bracelet 1 est obtenue lorsque ce corps 2 est réalisé, comme le film 3, en polyuréthane. Dans ce cas, le mélange du polyuréthane du film 3 et de celui du corps 2 pendant l'injection de ce dernier est si intime qu'il n'est plus possible de les distinguer l'un de l'autre.

Le motif décoratif du bracelet 1 qui vient d'être décrit se trouve à la surface extérieure de ce dernier. Il court donc le risque d'être partiellement effacé par les frottements que subit ce bracelet pendant son utilisation.

Il est donc souhaitable de protéger ce motif par une oouche de protection qui a été représentée au traits interrompus à la figure unique avec la référence 4.

Cette couche 4 peut être par exemple une couche de laque transparente ou être constituée par un autre film en polyuréthane.

Quelle que soit sa nature, cette couche de protection 4 peut être déposée sur le film 3 après que l'ensemble formé du corps 2 et du film 3 a été réalisé.

Cette couche de protection 4 peut également être déposée sur la totalité de la feuille ou de la bande de polyuréthane mentionnée ci-dessus, après que le motif décoratif a été imprimé sur celle-ci et avant qu'elle ne soit découpée pour former le film 3.

## Revendications

1. Objet en matière plastique en forme de lanière, notamment bracelet pour montre, comportant un corps (2) en un matériau thermoplastique, un film (3) fixé à une face dudit corps (2) et un motif décoratif imprimé sur ledit film (3), caractérisé par le fait que ledit film (3) est en polyuréthane.

2. Objet selon la revendication 1, caractérisé par le fait qu'il comporte en outre une couche de protection transparente (4) disposée sur ledit film (3).

3. Objet selon la revendication 1, caractérisé par le fait que ledit corps (2) est également en polyuréthane.

# RAPPORT DE RECHERCHE EUROPEENNE

Numero de la demande

EP 89 12 2259

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | US-A-4 183 986 (BLAETTERLEIN) <br> * Colonne 4, lignes 11-28; figure 2 * <br> --- | 1,3 | B 32 B 27/40 <br> A 44 C 5/00 |
| A | US-A-3 396 884 (HERZOG) <br> * Colonne 1, lignes 34-41; colonne 2, lignes 3-18 * <br> ----- | 1 | |

**DOMAINES TECHNIQUES RECHERCHES (Int. Cl.5)**

B 32 B
A 44 C 5

**Le présent rapport a été établi pour toutes les revendications**

| Lieu de la recherche | Date d'achèvement de la recherche | Examinateur |
|---|---|---|
| LA HAYE | 30-01-1990 | IBARROLA TORRES O.M. |

EPO FORM 1503 03.82 (P0402)